# EUROPÄISCHE PATENTSCHRIFT

(11) **EP 0 670 985 B1**
(45) Veröffentlichungstag und Bekanntmachung des Hinweises auf die Patenterteilung: **04.06.1997**
(21) Anmeldenummer: 94902710.6
(22) Anmeldetag: 07.12.1993
(51) Int. Cl.: F24D 13/02

(54) **WANDELEMENT MIT INTEGRIERTER HEIZUNG**
WALL ELEMENT WITH INTEGRAL HEATING
ELEMENT MURAL COMPORTANT UN CHAUFFAGE INTEGRE

(30) Priorität: 07.12.1992 DE 4241169
(43) Veröffentlichungstag der Anmeldung: 13.09.1995
(73) Patentinhaber: Rudolf Kurz GmbH + Co., D-89257 Illertissen (DE)
(72) Erfinder: Kurz, Hubert, D-81477 München (DE)
(74) Vertreter: Grünecker, August, Dipl.-Ing.
(86) Internationale Anmeldenummer: EP9303447
(87) Internationale Veröffentlichungsnummer: WO9414012

(56) Entgegenhaltungen:
- CH-A- 479 222
- DE-A- 3 932 101
- DE-A- 4 028 801
- FR-A- 1 257 218
- GB-A- 887 531
- NL-A- 6 912 807
- US-A- 3 246 689
- US-A- 3 277 273
- US-A- 4 952 775

## Beschreibung

Die Erfindung bezieht sich auf ein Wandelement mit integrierter Heizung, insbesondere zum Vorbau an Wände, zum Zwecke der Verbesserung des Raumklimas, der Wärmeisolation und der Entfeuchtung, mit einer zwischen Heizung und Wand angeordneten Reflexionsschicht, wobei das Wandelement ein Formteil mit Aufnahmevertiefungen, insbesondere Nuten, in die die Heizleiter aufgenommen sind, aufweist und die Reflexionsschicht die Aufnahmevertiefungen abdeckt.

Aus der US-32 77 273 ist ein relativ einfach gebautes Deckenelement dieser Gattung bekannt, bei dem die Aufnahmevertiefungen als Nuten in das Vollmaterial des Formteiles eingeformt ist. Die in den Aufnahmevertiefungen angeordneten elektrischen Heizleiter geben einen Teil Ihrer Heizleistung über das Formteil an den Innenraum ab. Ein anderer Teil wird über die Reflexionsschicht an den Zwischenraum zwischen Deckenelement und Decke abgegeben. Leider wird ein zu großer Teil der Heizleistung zur Decke abgegeben und ist damit für die Beheizung des Raumes verloren. In dem Zwischenraum zwischen Deckenelement und Decke besteht sogar die Gefahr der Bildung eines Hitzestaus, der an einigen Bauteilen Schäden in Folge der hohen thermischen Belastung hervorrufen kann.

Bei an senkrechten Wänden angeordneten Wandelementen wurde bisher vorgeschlagen, Abhilfe durch einen von unten nach oben von Raumluft durchströmten Luftschacht zwischen Wand und Wandelement zu schaffen. Die Luft nimmt im Luftschacht einen Teil der zur Wand abgegebenen Wärme auf und führt sie dem Raum wieder zu. Trotz dieses Luftschachtes hat sich allerdings herausgestellt, daß nach wie vor zu viel Wärme des Wandelementes direkt an die Wand verloren geht.

Der Erfindung liegt die Aufgabe zugrunde, ein Wandelement der obengenannten Gattung zu schaffen, das bei einfacher Bauweise den Heizbedürfnissen eines Raumes möglichst effektiv entspricht.

Diese Aufgabe wird erfindungsgemäß dadurch gelöst, daß das Formteil an die Reflexionsschicht angrenzende Luftkammern aufweist.

Durch die Luftkammern ist in dem Formteil eine zusätzliche Isolation gegen die Wärmeübertragung an die Wand vorgesehen. Dabei schafft Luft als guter Wärmeisolator eine zusätzliche Wärmebarriere zwischen dem Formteil und der Reflexionsschicht. Die wärmeleitende Berührungsfläche zwischen dem Formelement und der Reflexionsschicht kann auf ein Minimum reduziert werden.

Das erfindungsgemäße Wandelement überträgt den überwiegenden Teil der Wärme über das Formelement auf dem Wege der Wärmestrahlung und der Wärmeleitung an den zu beheizenden Innenraum, während nur ein verschwindend geringer Teil an die Wand abgegeben wird. Dieser geringe Teil kann durch entsprechende Wahl der Größe der Luftkammern so bemessen werden, daß der an die Wand abgegebene Teil gerade zum gewünschten Entfeuchten der Wand ausreicht und eventuell noch ein geringer Teil über einen Luftschacht dem Raum zugeführt wird.

Während im Stand der Technik zur Isolation des Wandelementes gegen die Wand zusätzliche Schichten in Form von Lattenrosten oder dergleichen auf der Wandseite des Wandelementes aufgebracht wurden, schafft die erfindungsgemäße Lösung zum ersten Mal die Möglichkeit einer integralen Aufnahme von Isolationsmitteln in Form der Luftkammern in das Formelement, Günstigerweise muß dabei die Dicke des Wandelementes nicht vergrößert werden. Die Luftkammern können beispielsweise in einem Schritt mit den Nuten für die Heizleiter in das Formteil eingeformt werden.

Als besonders vorteilhafter Effekt der Erfindung hat sich ein Spannungsausgleich im Wandelement erwiesen. Die durch die Heizleiter hervorgerufenen hohen thermischen Belastungen verursachen in dem Formelement hohe mechanische Spannungen, die zur Bildung von Rissen führen können. Dagegen hat sich herausgestellt, daß mit der erfindungsgemäßen Lösung die Rißbildung im wesentlichen vermieden ist.

Günstigerweise können die Luftkammern als nebeneinander angeordnete Rillen ausgeführt sein. Die Rillen können beispielsweise in Richtung der Holzmaserung ausgebildet sein und dadurch besonders gut die Gefahr der Rißbildung vermindern. Darüberhinaus können Rillen einfach, beispielsweise durch Fräsen, in das Formteil eingearbeitet werden und je nach Rillenabstand in beliebiger Dichte angeordnet werden.

Als Variante der Erfindung weisen die Luftkammern eine Form auf, so daß die Berührungsfläche zwischen Formelement und Reflexionsschicht klein ist gegenüber der Gesamtwärmedurchgangsfläche. Dadurch sind die Berührungsflächen beziehungsweise Wärmeleitbrücken zwischen Formelement und Reflexionsschicht minimiert.

Vorzugsweise sind die Heizleiter beabstandet von der Reflexionsschicht angeordnet. Dadurch ist zwischen Heizleitern und Reflexionsschicht ein zusätzlicher zur Wandseite gerichteter Isolationsraum geschaffen, der der Wärmeabgabe zur Wandseite hin einen zusätzlichen Widerstand entgegensetzt. Darüberhinaus ist ein Verlust durch Wärmeleitung direkt zwischen Heizleitern und Reflexionsschicht unterbunden.

Besonders vorteilhaft besteht das Formteil aus Holz. Holz erfüllt die strahlungsphysikalisch gewünschten Eigenschaften im besonderen Maße. Es hat einen hohen Emissionsgrad, so daß ein großer Anteil der Wärme durch Strahlung in den Raum abgegeben wird.

Günstigerweise besteht die Reflexionsschicht aus einer Metallfolie. Metallfolie reflektiert die vom Heizleiter abgegebene Wärmestrahlung weitgehend zum Raum zurück und strahlt nach außen, also zur Wand, infolge seiner kleinen Strahlungszahl nur wenig Energie ab.

Als Variante der Erfindung weist die Heizung elektrische Heizleiter auf, die in dem Wandelement flächig verteilt sind. Elektrische Heizleiter sind durch in jedem Raum vorhandene Stromanschlüsse zu versorgen. Sie sind billig und können einfach ausgetauscht werden. Es können beispielsweise Heizfolien oder Heizdrähte verwendet werden. Durch die flächige Verteilung der elektrischen Heizleiter in dem Wandelement wird die gesamte Wandelementfläche zur Wärmeabgabe genutzt.

In besonderer Weise können die elektrischen Heizleiter von einem elastischen Kabelmantel umschlossen sein und über leichten Preßsitz in die Aufnahmevertiefungen eingebracht sein. Dadurch sind die Heizleiter von dem elastischen Kabelmantel vor mechanischen Beschädigungen geschützt. Die Elastizität der Ummantelung bildet zusammen mit einer entsprechend ausgeformten Aufnahmevertiefung im Formteil einen leichten Presssitz. Über diesen ist der Heizleiter einfach in die Aufnahmevertiefung ohne zusätzliches Werkzeug einbringbarund befestigt. Diese Verbindung ist durch Anheben des Heizleiters senkrecht zur Wandelementfläche lösbar und ein defekter Heizleiter kann einfach ausgetauscht werden.

In bevorzugter Ausführungsform sind die Heizleiter meanderförmig in dem Wandelement angeordnet. Über diese Anordnung läßt sich die gesamte Wandelementfläche mit Heizleitern versehen. Sie können je nach Abstand der Meanderschleifen beliebig dicht in dem Wandelement angeordnet sein. Bei elektrischen Heizleitern heben sich die sie umgebenden magnetischen Felder von benachbart angeordneten Heizleitern mit entgegengesetzter Stromrichtung gegeneinander auf.

Es wird vorgeschlagen, das Wandelement in tafelförmige Baugruppen zu unterteilen, die miteinander durch mechanische und elektrische Verbindungselemente verbindbar sind. Dadurch sind einzelne voil funktionsfähige, fertige Baugruppen gebildet, die je nach gewünschter Heizleistung oder örtlicher Gegebenheit zusammenstellbar sind. Über mechanische Verbindungen, etwa seitlich durch Nut und Feder, können die Baugruppen miteinander verbunden werden, wobei elektrische Heizleiter untereinander verdindbar sind.

Vorzugsweise bestehen die Baugruppen im wesentlichen aus Profilholzbrettern, die durch Randfriese und/oder Mittelfriese verbunden sind. Mit den Profilholzbrettern läßt sich eine preiswerte und optisch ansprechende Täfelung einfach herstellen. Die Verbindung über Randfriese und/oder Mittelfriese ist einfach zusammenfügbar und wartungsfreundlich auseinandernehmbar; es können feste Flächen zusammengefügt werden. Profilholzbretter können als Standardware bezogen werden und sind einfach an die räumlichen Gegebenheiten anpaßbar.

Vorzugsweise ist das Wandelement beabstandet von der Wand angeordnet. Mit dem Abstand von der Wand bleibt beispielsweise der für vorhandene Installationen erforderliche Raum erhalten und leicht zugänglich. Dem Wärmeübergang von dem Wandelement zur Wand ist durch den Abstand ein zusätzlicher Widerstand entgegengesetzt.

Günstigerweise bilden die Reflexionsschicht und die Wand wenigstens einen im wesentlichen vertikalen Luftschacht, der bodenseitig wenigstens eine Zuluftöffnung und deckenseitig wenigstens eine Austrittsöffnung aufweist. In dem Luftschacht wird die Luft von der von dem Wandelement abgegebenen Wärme leichter und trockener. Es entsteht eine konvektive Strömung, die Feuchtigkeit von der Wand aufnimmt, beziehungsweise keine an diese abgibt. Über die konvektive Strömung kann eine angenehme Luftdurchmischung in dem Raum bewirkt werden.

Zweckmäßigerweise kann die Austrittsöffnung und/oder die Zuluftöffnung eine Schließklappe aufweisen. Dadurch kann die konvektive Strömung im Luftuschacht zwischen Wand und Wandelement unterbunden werden. Dies ist beispielsweise im Winter zweckmäßig, wenn die Raumluft trocken ist und das Entfeuchten der Wand nicht erforderlich ist. Für diesen Betriebszustand ist die Schließklappe als bewegbare Abdeckung vorgesehen, die wenigstens eine der Öffnungen verschließt.

Möglicherweise ist eine Bodensockelleiste an das Wandelement anbringbar. Die Bodensockelleiste kann beispielsweise als Ständer für das Wandelement dienen und ein abschließendes Element für mehrere nebeneinander angeordnete Baugruppen bilden.

Als bevorzugte Ausführungsform weist die Bodensockelleiste Zuluftschlitze auf. Über die Zuluftschlitze ist die Luftzufuhr zu dem Luftschacht zwischen Wand und Wandelement gewährleistet. Dabei kann die Bodensockelleiste als Blende mit optisch ansprechend ausgeformten Zuluftschlitzen ausgebildet sein.

In besonderer Weise kann die Bodensockelleiste Steckverbindungen für die Baugruppen aufweisen. So können die Baugruppen an der Bodensockelleiste ausgerichtet und fluchtend miteinander montiert werden.

Günstigerweise ist die Bodensockelleiste am Boden verschraubt. Dadurch ist die Bodensockelleiste fest am Boden verankert und ein aus einem oder mehreren Baugruppen bestehendes Wandelement kann auf diesen Ständer aufgesetzt und daran befestigt werden.

Besonders vorteilhaft ist ein Deckensockel an das Wandelement anbringbar. Der Deckensockel kann beispielsweise oben auf die Baugruppen aufgesteckt werden und als abschließende Blende für das Wandelement dienen.

Um die Austrittsöffnung optisch ansprechend auszugestalten, ist sie vorzugsweise im Deckensockel ausgebildet. Dies gewährleistet die Anordnung der Austrittsöffnungen nahe der Decke und schafft einen längeren, günstigen Weg für die Konvektionsströmung.

Günstigerweise ist die Schließklappe an dem Deckensockel angeordnet. Dadurch kann die Schließklappe nachträglich mit dem Deckensockel an das Wandelement angebracht werden.

Zum Positionieren des Wandelementes kann das Wandelement mit der Wand über Halterungen verbunden sein.

Besonders vorteilhaft weisen die Halterungen Eingriffsteile auf, die in die Friese und/oder in die Profilholzbretter eingreifen. Die Eingriffsteile greifen beispielsweise in Nuten der Profilbretter oder in Nuten der Friese ein und sind damit in der Nutrichtung verstellbar. Dies erlaubt ein nachträgliches Ausrichten des Wandelements in Nutrichtung.

Vorzugsweise besteht die Halterung wenigstens aus einem Eingriffsteil und wenigstens einem mit diesem verstellbar verbundenen Wandteil, das mit lösbaren Verbindungselementen an der Wand befestigt ist. Das Wandteil läßt sich beispielsweise als Blechwinkel mit Langlöchern an beiden Schenkeln am Eingriffsteil links- oder rechtsseitig und tiefenverstellbar befestigen. Damit ist der an der Wand zu befestigende Schenkel beispielsweise mit einer Handbohrmaschine oder einem Schrauber gut erreichbar. Als lösbare Verbindungselemente können Dübel und/oder Schrauben verwendet werden. Die mehrteilige Ausbildung der Halterungen ermöglicht auch Nichthandwerkern das Anpassen an die unterschiedlichen Befestigungsstellen der Wand.

Vorzugsweise sind den Baugruppen ergänzende Anpaßsektionen zugeordnet, die den örtlichen Gegebenheiten anpaßbar sind. Damit lassen sich die preisgünstig in Standardabmessungen gefertigten Baugruppen an die tatsächlichen Einbaumaße anpassen. Die Anpaßsektionen sind beispielsweise als flächenergänzende Blindfelder ohne Heizleiter ausgebildet. Sie können vor Ort in Höhe und Breite auf das Paßmaß zugeschneidert werden. Die Blindfelder sind sowohl als Rand- wie als Zwischenfelder einsetzbar. Im letztgenannten Fall werden die Blindfelder beim Verwenden von elektrischen Heizleitern durch längere Verbindungsleiter zwischen den beheizten Baugruppen überbrückt.

Günstigerweise sind die Enden der elektrischen Heizleiter in den Baugruppen mit Anschlußteilen verbunden. Die Verbindungsleiter können farblich markiert sein, so daß auch ein Laie Baugruppe an Baugruppe anschließen kann. Falls zwischen zwei Baugruppen ein Blindfeld eingebaut ist, wird der größere Abstand zwischen Anschlußteilen durch entsprechend längere Verbindungsleiter überbrückt.

Zur einfachen Montage sind die Anschlußteile vorzugsweise beidseitig an den Baugruppen angeordnet und mit Klemm- oder Steckverbindungen ausgestattet.

Besonders vorteilhaft sind die Anschlußteile einer Baugruppe miteinander über Kabel verbunden.

Denkbar sind die Klemm- oder Steckverbindungen der Anschlußteile benachbarter Baugruppen über Verbindungsleiter wahlweise miteinander verbunden. Dadurch läßt sich eine serielle Hintereinanderschaltung der Heizleiter mehrfacher Baugruppen erreichen.

Günstigerweise werden die elektrischen Heizleiter von einem Transformator mit Kleinspannung, vorzugsweise unter 50 V effektiv, versorgt. Durch die Verwendung der Kleinspannung kann das Verlegen der Heizleiter auch von Nichtelektrikern ausgeführt werden. Die Gefahren unsachgemäßer Handhabung sind reduziert.

Möglicherweise ist der Transformator sekundärseitig mit mehreren Ausgängen unterschiedlicher Kleinspannungen ausgestattet, an die Stromkreise der Heizleiter wahlweise anschließbar sind. Damit sind verschiedene Strom- beziehungsweise Widerstandsanpassungen möglich.

Vorzugsweise sind die Ausgänge mit den Heizleitern über einen Betriebsartschalter verbunden. Dadurch können verschiedene Betriebsarten, zum Beispiel verschiedene Heizstufen, Entfeuchtungsstufen, Automatikbetrieb oder Aus- und Einschalten des gesamten Wandelements, gewählt werden. Über den Betriebsartschalter ist dies unabhängig von baulichen Veränderungen des Wandelements oder Umsteckvorgängen in der elektrischen Schaltung möglich.

Als Variante der Erfindung ist im Primärstromkreis ein Relais eingebaut, das über den Betriebsartschalter direkt und/oder indirekt über Temperaturfühler oder Feuchtefühler schaltbar ist. Dadurch können individuell im Raum gemessene klimatische Werte als Steuer- und/oder Regelgröße für die Betriebsart des Wandelements genutzt werden. Das Wandelement kann vollständig automatisch betrieben werden.

Ein Ausführungsbeispiel der Erfindung ist in der Zeichnung dargestellt und wird nachstehend erläutert. Es zeigen:
- Fig.1: einen Vertikalscnnitt durch eine Baugruppe eines erfindungsgemäßen Wandelements,
- Fig.2: die Baugruppe der Figur 1 von der Wandseite her betrachtet,
- Fig.3: einen horizontalen Teilschnitt einer Baugruppe mit benachbarten Baugruppen,
- Figur 4a, b: einen Prinzipschaltplan der Elektrik,
- Fig.5: eine Halterung eines erfindungsgemäßen Wandelements in der Draufsicht, und
- Fig.6: einen horizontalen Teilschnitt der Halterung nach Figur 5.

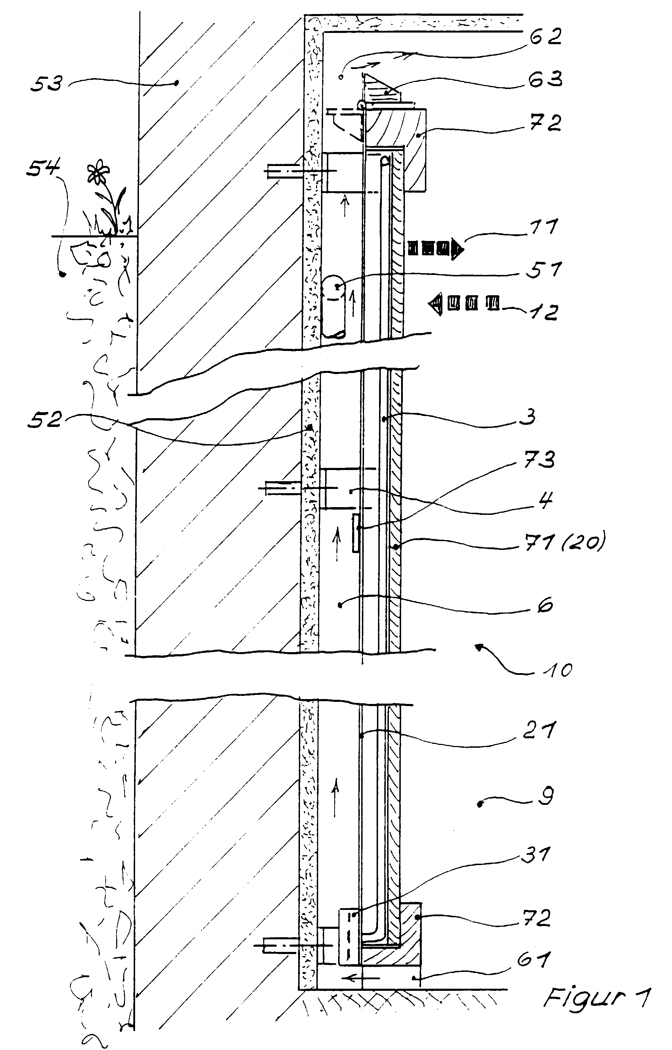

Im Schnittbild der Figur 1 erkennt man eine Kelleraußenwand 53 aus Beton, außenseitig das Erdreich 54 und innenseitig das im Abstand vorgebaute Wandelement 10 mit integrierter Heizung 3. Auf dem Innenputz 52 der Kelleraußenwand 53 befinden sich Installationen 51. Die Tiefe des Luftschachtes 6 wurde durch entsprechendes Einstellen von Halterungen 4 so bemessen, daß die Reflexionsschicht 21 nicht mit den Installationen 51 kollidiert. Das Formteil 20 besteht aus Profilholzbrettern 71, deren Oberfläche Wärmestrahlung 11 emittiert und Wärmestrahlung 12 absorbiert. Die in Rillen 74 der Profilholzbretter 71 verlegten Heizleiter (z.B. Drähte) 3 sind an ihren Enden an Anschlußteile 31 angeschlossen, die seitlich an bodenseitigen oder deckenseitigen Friesen 72 angeordnet sind. Die Anschlußteile 31 einer Baugruppe 7 sind miteinander über Kabel 33 und mit denen der benachbarten Baugruppe 7 über Verbindungsleiter 34 verbunden, die hier als flexible Kabel mit Flachstecker ausgeführt sind.

Infolge thermischer Konvektion steigt die Luft im Luftschacht 6 hoch, saugt über eine Zuluftöffnung 61 Luft an und strömt in der Nähe der Decke durch eine Austrittsöffnung 62 aus. Falls die Zirkulation nicht gewünscht wird, schließt man die Austrittsöffnung 62 mit einer drehbar angeordneten Schließklappe 63.

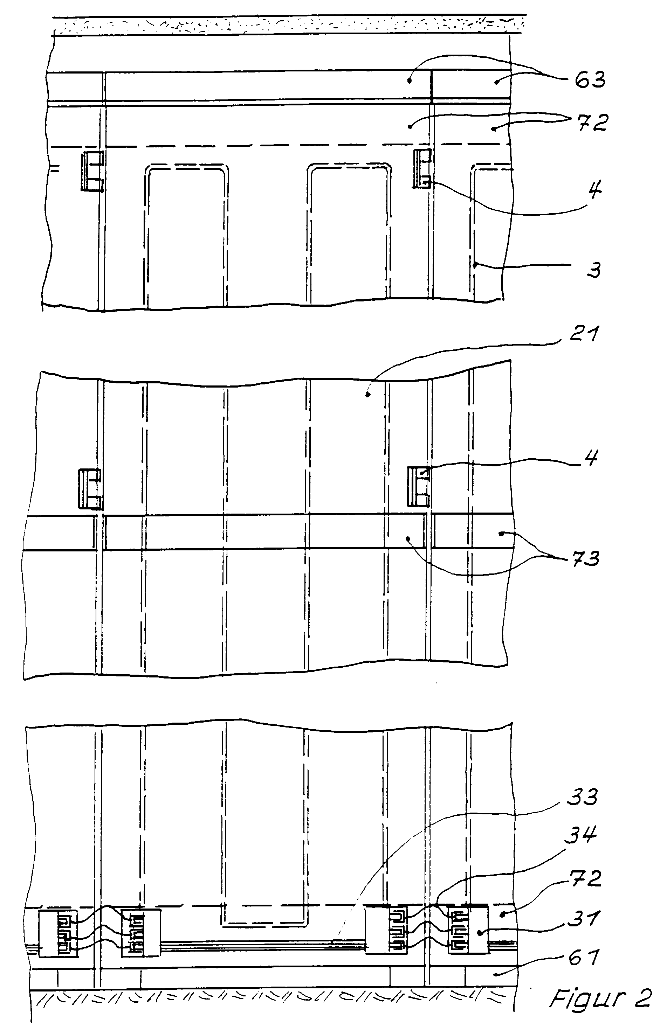

In Figur 2 sieht man das oben beschriebene Ausführungsbeispiel in einer Ansicht von der Wand her, wobei die Verlegung der Heizleiter 3 und die der Kabel 33 mit ihren Anschlußteilen 31 und deren Verbindungsleiter 34 gut zu erkennen ist. Die Anschlußteile 31 können vertieft, innerhalb der Friese 72, eingebaut sein, damit sie beim Stapeln von Baugruppen 7 nicht beschädigt werden.

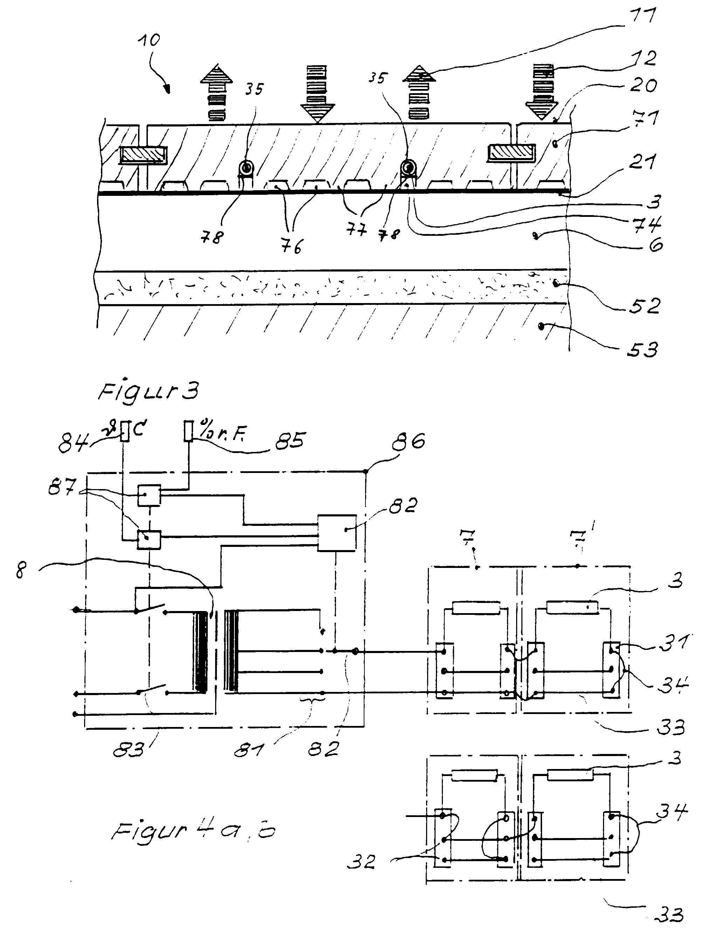

Figur 3 zeigt Profilholzbretter 71 einer Baugruppe 7 im Schnitt. Auf der Oberfläche des Formteils 20 findet der Strahlungsaustausch 11, 12 statt. Die Reflexionsschicht 21 besteht in diesem Beispiel aus einer Reinaluminiumfolie 21. Diese liegt nicht ganzflächig, sondern nur auf den zwischen den Rillen 74 ausgebildeten Rippen 77 des Profilholzbretts 71 auf.

In vertieften Rillen 74 sind die Heizleiter 3 eingebettet und mit getackerten Klammern 78 zusätzlich lagengesichert. Die elektrischen Heizleiter 3 sind von einem elastischen Kabelmantel 35 umschlossen und über leichten Preßsitz in die Rillen 74 eingebracht. Zwischen den die Heizleiter aufnehmenden Rillen 74 sind an die Reflexionsschicht 21 angrenzende Luftkammern 76 ebenfalls als nebeneinander angeordnete Rillen ausgebildet. Die Luftkammern 76 bilden untereinander als auch zusammen mit den die Heizleiter 3 aufnehmenden Rillen 74 schmale Rippen 77. Die Reflexionsschicht 21 liegt auf den schmalen Rippen 77 auf und deckt dadurch die Luftkammern 76 und die rillen 74 ab. Unter dem Formteil 21 erkennt man den Luftschacht 6, den Putz 52 und die Betonwand 53.

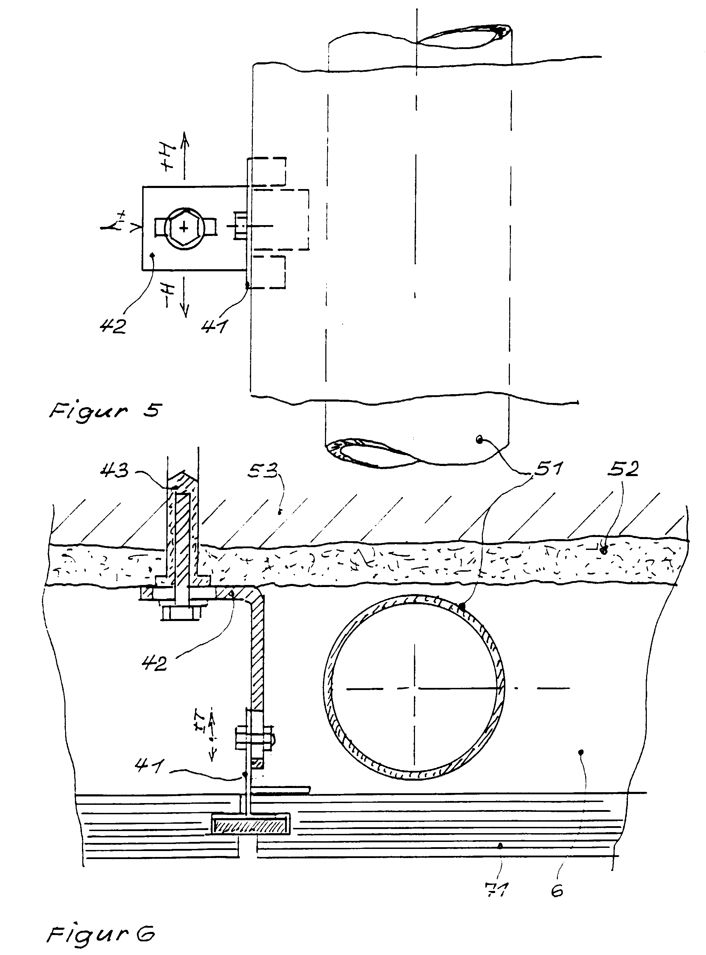

Aus den Figuren 4a, b ist die Schaltung der Elektroteile ersichtlich. In einem Schaltkasten 86 befinden sich ein Transformator 8 mit den Kleinspannungsausgängen 81, ein Betriebsartenschalter 82, ein Relais 83 und Anpassungsmodule 87 für einen Temperaturfühler 84 und einen Feuchtefühler85. Mit dem Betriebsartschalter 82 sind die verschiedenen Betriebszustände anwählbar, insbesondere "AUS", "EIN", die Heizstromstärke über die Spannung und die Steuerung über die Lufttemperatur im Luftschacht 6 beziehungsweise der Oberflächentemperatur des Formteils 21 oder der Kelleraußenwand 53. Alternativ ist für die Entfeuchtung der Wand 53 das Ansteuern des Relais 83 vorgesehen.

Die Baugruppen 7, 7' usw. sind seriell, parallel oder in Gruppen schaltbar über die Verbindungsleiter 34 in den Klemm- oder Steckverbindungen 32 der Anschlußteile 31. Fehlanschlüsse der Niederspannungsseite sind unkritisch und werden durch eine Sicherung (nicht eingezeichnet) im Schaltkasten 86 abgefangen.

Die Figuren 5 und 6 zeigen Details der Befestigung an der Wand 53 mit einem Installationsrohr 51. Die Tiefe des Luftschachtes 6 wird mittels der Halterungen 4 angepaßt. Ein Eingriffsteil 41 ist in der Nut des Profilholzbretts 71 verankert und mit einem Wandteil 42 verschraubt, das über den Dübel 43 an der Wand 53 befestigt ist. Langlöcher in den Schenkeln des Wanteiles 42 ermöglichen die Feineinstellung des Wandelements 10.

Außer der beschriebenen Ausführungen ist es im Rahmen des Erfindungsgedankens ebenso möglich die Profilholzbretter 71 statt vertikal horizontal anzuordnen, das Formteil 21 aus mehreren Schichten, etwa aus Wellkarton mit Oberflächen aus Alufolie, auszubilden oder das Wandelement 10 auch an der Decke oder am Fußboden zu montieren. Sinnvoll sind insbesondere horizontale Teilverkleidungen, bei denen der vertikale Teil des Luftschachtes 6 die erwünschte Luftströmung noch ausreichend zustande bringt.

## Patentansprüche

1. Wandelement (10) mit integrierter Heizung (3), insbesondere zum Vorbau an Wände (53) zum Zwecke der Verbesserung des Raumklimas, der Wärmeisolation und der Entfeuchtung, mit einer zwischen Heizung (3) und Wand (53) angeordneten Reflexionsschicht (21), wobei das Wandelement ein Formteil (20) mit Aufnahmevertiefungen (74), insbesondere Nuten, in die die Heizleiter (3) aufgenommen sind, aufweist und die Reflexionsschicht (21) die Aufnahmevertiefungen (74) abdeckt,
**dadurch gekennzeichnet,**
daß das Formteil (20) an die Reflexionsschicht (21) angrenzende Luftkammern (76) aufweist.

2. Wandelement nach Anspruch 1,
**dadurch gekennzeichnet,**
daß die Luftkammern (76) als nebeneinander angeordnete Rillen ausgeführt sind.

3. Wandelement nach Anspruch 1 oder 2,
**dadurch gekennzeichnet,**
daß die Luftkammern (76) eine Form aufweisen, so daß die Berührungsfläche (77) zwischen Formteil (20) und Reflexionsschicht (21) klein ist gegenüber der Gesamtwärmedurchgangsfläche.

4. Wandelement nach wenigstens einem der vorhergehenden Ansprüche,
**dadurch gekennzeichnet,**
daß die Heizleiter (3) beabstandet von der Reflexionsschicht (21) angeordnet sind.

5. Wandelement nach wenigstens einem der vorhergehenden Ansprüche,
**dadurch gekennzeichnet,**
daß das Formteil (20) aus Holz besteht.

6. Wandelement nach wenigstens einem der vorhergehenden Ansprüche,
**dadurch gekennzeichnet,**
daß die Reflexionsschicht (21) aus einer Metallfolie besteht.

7. Wandelement nach wenigstens einem der vorhergehenden Ansprüche,
**dadurch gekennzeichnet,**
daß die Heizung elektrische Heizleiter (3) aufweist, die in dem Wandelement (10) flächig verteilt sind.

8. Wandelement nach Anspruch 7,
**dadurch gekennzeichnet,**
daß die elektrischen Heizleiter (3) von einem elastischen Kabelmantel (35) umschlossen sind und über leichten Preßsitz in die Aufnahmevertiefungen (74) eingebracht sind.

9. Wandelement nach wenigstens einem der vorhergehenden Ansprüche,
**dadurch gekennzeichnet,**
daß die Heizleiter (3) meanderförmig in dem Wandelement (10) angeordnet sind.

10. Wandelement nach wenigstens einem der vorhergehenden Ansprüche,
**dadurch gekennzeichnet,**
daß das Wandelement (10) in tafelförmige Baugruppen (7) unterteilt ist, die miteinander durch mechanische und elektrische Verbindungselemente (34, 72, 73) verbindbar sind.

11. Wandelement nach Anspruch 10,
**dadurch gekennzeichnet,**
daß die Baugruppen (7) im wesentlichen aus Profilholzbrettern (71) bestehen, die durch Randfriese (72) und/oder Mittelfriese (73) verbunden sind.

12. Wandelement nach Anspruch 10 oder 11,
**dadurch gekennzeichnet,**
daß den Baugruppen (7) ergänzende Anpaßsektionen zugeordnet sind, die den örtlichen Gegebenheiten anpaßbar sind.

13. Wandelement nach einem der Ansprüche 10 bis 12,
**dadurch gekennzeichnet,**
daß die Heizleiter (3) elektrisch sind und ihre Enden in den Baugruppen (7) mit Anschlußteilen (31) verbunden sind.

14. Wandelement nach Anspruch 13,
**dadurch gekennzeichnet,**
daß die Anschlußteile (31) beiseitig an den Baugruppen (7) angeordnet und mit Klemm- oder Steckverbindungen (32) ausgestattet sind.

15. Wandelement nach Anspruch 13 oder 14,
**dadurch gekennzeichnet,**
daß die Anschlußteile (31) einer Baugruppe (7) miteinander über Kabel (33) verbunden sind.

16. Wandelement nach einem der Ansprüche 13 bis 15,
**dadurch gekennzeichnet,**
daß die Klemm- oder Steckverbindungen (32) der Anschlußteile (31) benachbarter Baugruppen (7) über Verbindungsleiter (34) wahlweise miteinander verbunden sind.

17. Wandelement nach wenigstens einem der vorhergehenden Ansprüche,
**dadurch gekennzeichnet,**
daß das Wandelement (10) beabstandet von der Wand (53) angeordnet ist.

18. Wandelement nach wenigstens einem der vorhergehenden Ansprüche,
**dadurch gekennzeichnet,**
daß die Reflexionsschicht (21) und die Wand (53) wenigstens einen im wesentlichen vertikalen Luftschacht (6) bilden, der bodenseitig wenigstens eine Zuluftöffnung (61) und deckenseitig wenigstens eine Austrittsöffnung (62) aufweist.

19. Wandelement nach Anspruch 18,
**dadurch gekennzeichnet,**
daß die Austrittsöffnung (52) und/oder die Zuluftöffnung (61) eine Schließklappe (63) aufweist.

20. Wandelement nach einem der Ansprüche 18 oder 19,
**dadurch gekennzeichnet,**
daß die Austrittsöffnung (62) in einem Deckensockel ausgebildet ist.

21. Wandelement nach wenigstens einem der vorhergehenden Ansprüche,
**dadurch gekennzeichnet,**
daß eine Bodensockelleiste an das Wandelement (10) anbringbar ist.

22. Wandelement nach Anspruch 21,
**dadurch gekennzeichnet,**
daß die Bodensockelleiste Zuluftschlitze aufweist.

23. Wandelement nach Anspruch 21 oder 22,
**dadurch gekennzeichnet,**
daß die Bodensockelleiste Steckverbindungen für die Baugruppen (7) aufweist.

24. Wandelement nach einem der Ansprüche 21 bis 23,
**dadurch gekennzeichnet,**
daß die Bodensockelleiste am Boden verschraubt ist.

25. Wandelement nach wenigstens einem der vorhergehenden Ansprüche,
**dadurch gekennzeichnet,**
daß ein Deckensockel an das Wandelement anbringbar ist.

26. Wandelement nach Anspruch 25,
**dadurch gekennzeichnet,**
daß eine Schließklappe (63) an dem Deckensockel angeordnet ist.

27. Wandelement nach wenigstens einem der vorhergehenden Ansprüche,
**dadurch gekennzeichnet,**
daß das Wandelement (10) mit der Wand (53) über Halterungen (4) verbunden ist.

28. Wandelement nach Anspruch 27,
**dadurch gekennzeichnet,**
daß die Halterungen (5) Eingriffsteile (41) aufweisen, die in die Friese (72, 73) und/oder in die Profilholzbretter (71) eingreifen.

29. Wandelement nach Anspruch 27 oder 28,
**dadurch gekennzeichnet,**
daß die Halterung (4) wenigstens aus einem Eingriffsteil (41) und wenigstens einem mit diesem verstellbar verbundenen Wandteil (42) besteht, das mit lösbaren Verbindungselementen (43) an der Wand (53) befestigt ist.

30. Wandelement nach wenigstens einem der vorhergehenden Ansprüche,
**dadurch gekennzeichnet,**
daß die Heizleiter (3) elektrische Heizleiter (3) sind und von einem Transformator (8) mit Kleinspannung, vorzugsweise unter 50 V effektiv, versorgt werden.

31. Wandelement nach Anspruch 30,
**dadurch gekennzeichnet,**
daß der Transformator (8) sekundärseitig mit mehreren Ausgängen (81) unterschiedlicher Kleinspannungen ausgestattet ist, an die Stromkreise der Heizleiter (3) wahlweise anschließbar sind.

32. Wandelement nach Anspruch 31,
**dadurch gekennzeichnet,**
daß Ausgänge (81) mit den Heizleitern (3) über einen Betriebsartschalter (82) verbunden sind.

33. Wandelement nach einem der Ansprüche 30 bis 32,
**dadurch gekennzeichnet,**
daß im Primärstromkreis ein Relais (83) eingebaut ist, das über den Betriebsartschalter (82) direkt und/oder indirekt über Temperaturfühler (84) oder Feuchtefühler (85) schaltbar ist.

## Claims

1. A wall element (10) with integrated heating (3), more particularly for fitting onto walls (53) for the purpose of improving the room environment, heat insulation and dehumidification, with a reflection layer (21) arranged between the heating (3) and wall (53), the wall element (10) comprising a moulded part (20) with receiving recesses (74), more particularly grooves, in which the heating conductors (3) are accommodated, and the reflection layer (21) covering the receiving recesses (74), characterised in that the moulded part (20) comprises air chambers (76) adjoining the reflection layer (21).

2. A wall element according to claim 1, characterised in that the air chambers (76) are designed as grooves arranged adjacent one another.

3. A wall element according to claim 1 or 2, characterised in that the air chambers (76) are shaped in such a manner that the contact surface area (77) between the moulded part (20) and the reflection layer (21) is small as compared with the overall heat transmission surface area.

4. A wall element according to at least one of the preceding claims, characterised in that the heating conductors (3) are arranged at a distance from the reflection layer (21).

5. A wall element according to at least one of the preceding claims, characterised in that the moulded part (20) is made of wood.

6. A wall element according to at least one of the preceding claims, characterised in that the reflection layer (21) is formed by a metal film.

7. A wall element according to at least one of the preceding claims, characterised in that the heating comprises electrical heating conductors (3), which are distributed over the surface of the wall element (10).

8. A wall element according to claim 7, characterised in that the electrical heating conductors (3) are enclosed by an elastic cable casing (35) and are fitted by a light press fit in the receiving recesses (74).

9. A wall element according to at least one of the preceding claims, characterised in that the heating conductors (3) are arranged in meander fashion in the wall element (10).

10. A wall element according to at least one of the preceding claims, characterised in that the wall element (10) is divided into panel-like subassemblies (7), which can be connected to one another by mechanical and electrical connecting elements (34, 72, 73).

11. A wall element according to claim 10, characterised in that the subassemblies (7) are essentially formed by profile wooden boards (71), which are connected by peripheral mouldings (72) and/or central mouldings (73).

12. A wall element according to claim 10 or 11, characterised in that supplementary adapter sections are associated with the subassemblies (7), which adapter sections can be adapted to the respective local circumstances.

13. A wall element according to one of claims 10 to 12, characterised in that the heating conductors (3) are electrical and their ends in the subassemblies (7) are connected to connector elements (31).

14. A wall element according to claim 13, characterised in that the connector elements (31) are arranged on both sides of the subassemblies (7) and are equipped with clamping or plug connections (32).

15. A wall element according to claim 13 or 14, characterised in that the connector elements (31) of a subassembly (7) are connected to one another via cables (33).

16. A wall element according to one of claims 13 to 15, characterised in that the clamping or plug connections (32) of the connector elements (31) of adjacent subassemblies (7) are selectively connected to one another via connecting conductors (34).

17. A wall element according to at least one of the preceding claims, characterised in that the wall element (10) is arranged at a distance from the wall (53).

18. A wall element according to at least one of the preceding claims, characterised in that the reflection layer (21) and the wall (53) form at least one substantially vertical air shaft (6), which comprises at least one supply air aperture (61) at its floor end and at least one outlet aperture (62) at its ceiling end.

19. A wall element according to claim 18, characterised in that the outlet aperture (52) and/or the supply air aperture (61) comprise a closing flap (63).

20. A wall element according to one of claims 18 or 19, characterised in that the outlet opening (62) is constructed in a ceiling board.

21. A wall element according to at least one of the preceding claims, characterised in that a skirting board can be fitted to the wall element (10).

22. A wall element according to claim 21, characterised in that the skirting board comprises supply air slots.

23. A wall element according to claim 21 or 22, characterised in that the skirting board comprises plug connections for the subassemblies (7).

24. A wall element according to one of claims 21 to 23, characterised in that the skirting board is screwed to the floor.

25. A wall element according to at least one of the preceding claims, characterised in that a ceiling socket can be fitted to the wall element.

26. A wall element according to claim 25, characterised in that a closing flap (63) is arranged on the ceiling board.

27. A wall element according to at least one of the preceding claims, characterised in that the wall element (10) is connected to the wall (53) via mounting elements (4).

28. A wall element according to claim 27, characterised in that the mounting elements (4) comprises engagement parts (41), which engage in the mouldings (72, 73) and/or in the profile wooden boards (71).

29. A wall element according to claim 27 or 28, characterised in that the mounting element (4) is formed by at least one engagement part (41) and at least one wall part (42), which is adjustably connected to the engagement part (41) and is secured to the wall (53) by means of releasable connecting elements (43).

30. A wall element according to at least one of the preceding claims, characterised in that the heating conductors (3) are electrical heating conductors (3) and are supplied by a transformer (8) with low voltage, preferably below 50 V effectively.

31. A wall element according to claim 30, characterised in that the transformer (8) is secondarily fitted with a plurality of outputs (81) of different low voltages, to which the circuits of the heating conductors (3) can be selectively connected.

32. A wall element according to claim 31, characterised in that the outputs (81) are connected to the heating conductors (3) via a mode switch (82).

33. A wall element according to one of claims 30 to 32, characterised in that a relay (83) is fitted in the primary circuit, which relay can be switched directly by the mode switch (82) and/or indirectly via temperature sensors (84) or humidity sensors (85).

## Revendications

1. Elément mural (10) comportant un chauffage intégré (3) destiné notamment à être monté en saillie sur des murs (53) dans un but d'amélioration du conditionnement de l'air, de l'isolation thermique et de la déshumidification, comportant une couche réflective (21) disposée entre le chauffage (3) et le mur (53), l'élément mural présentant une partie préformée (20) avec des cavités de logement (74), en particulier des rainures, dans lesquelles sont logés les conducteurs chauffants (3), et la couche réflective (21) recouvrant les cavités de logement (74), caractérisé en ce que la pièce préformée (20) présente des chambres à air (76) adjacentes à la couche réflective (21).

2. Elément mural selon la revendication 1, caractérisé en ce que les chambres à air (76) sont exécutées comme des gorges disposées les unes à côté des autres.

3. Elément mural selon la revendication 1 ou 2, caractérisé en ce que les chambres à air (76) sont d'une forme telle que la surface de contact (77) entre la pièce préformée (20) et la couche réflective (21) est petite par rapport à la surface totale de transmission de la chaleur.

4. Elément mural selon l'une au moins des revendications précédentes, caractérisé en ce que les conducteurs chauffants (3) sont disposés à l'écart de la couche réflective (21).

5. Elément mural selon l'une au moins des revendications précédentes, caractérisé en ce que la pièce préformée (20) est composée de bois.

6. Elément mural selon l'une au moins des revendications précédentes, caractérisé en ce que la couche réflective (21) est composée d'une feuille métallique.

7. Elément mural selon l'une au moins des revendications précédentes, caractérisé en ce que le chauffage présente des conducteurs chauffants (3) électriques, qui sont répartis dans l'élément mural (10).

8. Elément mural selon la revendication 7, caractérisé en ce que les conducteurs chauffants (3) électriques sont entourés d'une gaine de câble (35) élastique et sont mis en place dans les cavités de logement (74) par ajustage serré léger.

9. Elément mural selon l'une au moins des revendications précédentes, caractérisé en ce que les conducteurs chauffants (3) sont disposés en forme de méandre dans l'élément mural (10).

10. Elément mural selon l'une au moins des revendications précédentes, caractérisé en ce que l'élément mural (10) est divisé en sous-ensembles (7) en forme de plaques, qui peuvent être reliés ensemble par des éléments de raccord (34, 72, 73) mécaniques et électriques.

11. Elément mural selon la revendication 10, caractérisé en ce que les sous-ensembles (7) sont essentiellement composés de planches en bois profilées (71), qui sont reliées par des frises marginales (72) et / ou des frises médianes (73).

12. Elément mural selon la revendication 10 ou 11, caractérisé en ce que des sections d'adaptation complémentaires, pouvant être adaptées aux conditions locales, sont associées aux sous-ensembles (7).

13. Elément mural selon l'une des revendications 10 à 12, caractérisé en ce que les conducteurs chauffants (3) sont électriques et leurs extrémités sont reliées dans les sous-ensembles (7) à des pièces de raccordement (31).

14. Elément mural selon la revendication 13, caractérisé en ce que les pièces de raccordement (31) sont disposées des deux côtés sur les sous-ensembles (7) et sont dotées de raccords à pince ou à fiche (32).

15. Elément mural selon la revendication 13 ou 14, caractérisé en ce que les pièces de raccordement (31) d'un sous-ensemble (7) sont reliées ensemble au moyen de câbles (33).

16. Elément mural selon l'une des revendications 13 à 15, caractérisé en ce que les raccords à pince ou à fiche (32) des pièces de raccordement (31) de sous-ensembles (7) contigus sont facultativement reliés ensemble au moyen de conducteurs de connexion (34).

17. Elément mural selon l'une au moins des revendications précédentes, caractérisé en ce que l'élément mural (10) est disposé à l'écart du mur (53).

18. Elément mural selon l'une au moins des revendications précédentes, caractérisé en ce que la couche réflective (21) et le mur (53) forment au moins une conduite d'air (6) essentiellement verticale, qui présente du côté du sol au moins une ouverture d'air amené (61) et du côté du plafond au moins une ouverture de sortie (62).

19. Elément mural selon la revendication 18, caractérisé en ce que l'ouverture de sortie (52) et / ou l'ouverture d'air amené (61) présente(nt) un clapet de fermeture (63).

20. Elément mural selon l'une des revendications 18 ou 19, caractérisé en ce que l'ouverture de sortie (62) est conçue dans une embase de plafond.

21. Elément mural selon l'une au moins des revendications précédentes, caractérisé en ce qu'un listel d'embase de sol peut être placé sur l'élément mural (10).

22. Elément mural selon la revendication 21, caractérisé en ce que le listel d'embase de sol présente des fentes d'air amené.

23. Elément mural selon la revendication 21 ou 22, caractérisé en ce que le listel d'embase de sol présente des raccords à fiche pour les sous-ensembles (7).

24. Elément mural selon l'une des revendications 21 à 23, caractérisé en ce que le listel d'embase de sol est vissé au sol.

25. Elément mural selon l'une au moins des revendications précédentes, caractérisé en ce qu'une embase de plafond peut être placée sur l'élément mural.

26. Elément mural selon la revendication 25, caractérisé en ce qu'un clapet de fermeture (63) est disposé sur l'embase de plafond.

27. Elément mural selon l'une au moins des revendications précédentes, caractérisé en ce que l'élément mural (10) est relié au mur (53) au moyen de fixations (4).

28. Elément mural selon la revendication 27, caractérisé en ce que les fixations (4) présentent des parties d'engagement (41), qui s'engagent dans les frises (72, 73) et / ou dans les planches en bois profilées (71).

29. Elément mural selon la revendication 27 ou 28, caractérisé en ce que la fixation (4) est composée d'au moins une partie d'engagement (41) et d'au moins une partie murale (42) reliée à celle-ci de façon ajustable, qui est fixée au mur (53) par des éléments de raccord (43) amovibles.

30. Elément mural selon l'une au moins des revendications précédentes, caractérisé en ce que les conducteurs chauffants (3) sont des conducteurs chauffants (3) électriques et sont alimentés par un transformateur (8) de tension faible, de préférence effective au-dessous de 50 V.

31. Elément mural selon la revendication 30, caractérisé en ce que le transformateur (8) est doté de façon secondaire de plusieurs sorties (81) de différentes tensions faibles, auxquelles peuvent être facultativement raccordés des circuits des conducteurs chauffants (3).

32. Elément mural selon la revendication 31, caractérisé en ce que les sorties (81) sont reliées aux conducteurs chauffants (3) par un sélecteur de fonctions (82).

33. Elément mural selon l'une des revendications 30 à 32, caractérisé en ce qu'un relais (83) est inséré dans un circuit primaire inducteur, relais pouvant être commuté par le sélecteur de fonctions (82) directement et / ou indirectement au moyen d'une sonde de température (84) ou d'un détecteur d'humidité (85).
